Europäisches Patentamt

European Patent Office

Office européen des brevets

(11) Veröffentlichungsnummer: **0 423 468 A2**

# (12) EUROPÄISCHE PATENTANMELDUNG

(21) Anmeldenummer: **90116428.5**

(22) Anmeldetag: **28.08.90**

(51) Int. Cl.5: **F02P 7/10, F16B 21/18, F02P 7/02**

(30) Priorität: **14.10.89 DE 8912249 U**

(43) Veröffentlichungstag der Anmeldung: **24.04.91 Patentblatt 91/17**

(84) Benannte Vertragsstaaten:
**DE FR GB IT**

(71) Anmelder: **ROBERT BOSCH GmbH**
**Postfach 10 60 50**
**W-7000 Stuttgart 10(DE)**

(72) Erfinder: **Doderer, Klaus, Dipl.-Ing.**
**Wildbadstrasse 15**
**W-7540 Neuenberg(DE)**
Erfinder: **Lein, Ralf**
**Jägerstrasse 79**
**W-7014 Kornwestheim(DE)**

(54) **Verteilerläufer von Zündverteilern für Brennkraftmaschinen.**

(57) Es ist die Axialsicherung eines Verteilerläufers (11) auf der Antriebswelle (12) eines Zündverteilers in gut montierbarer Weise kostengünstig zu verwirklichen.

Dazu wird ein Sicherungselement (14), das zumindest mittelbar mit der Antriebswelle (12) verbindbar ist und an dem Rastkörper (26) ausgebildet sind mit einem Verteilerläufer (11) gefügt, der in seiner Außenwandung eine an einem Schaft (16) konzentrisch ausgebildete Ringrille (18) aufweist, in die die Rastkörper (26) einrastbar sind.

Hierdurch ist eine einfach gestaltete funktionsgerechte Verbindung zwischen Verteilerläufer (11) und Antriebswelle (12) geschaffen, die infolge der mit einer Vorspannung beaufschlagten Formschlußsicherung auch erhöhten axialen Belastungen der Zündverteiler bei Ottomotoren gerecht wird.

EP 0 423 468 A2

# VERTEILERLÄUFER VON ZÜNDVERTEILERN FÜR BRENNKRAFTMASCHINEN

## Stand der Technik

Die Erfindung geht aus von einem Verteilerläufer von Zündverteilern für Brennkraftmaschinen nach der Gattung des Anspruchs 1.

Aus offenkundlichen Benutzungshandlungen sind bereits Verteilerläufer dieser Gattung bekannt, bei denen die Fixierung auf der Antriebswelle über ein federndes Sicherungselement vorgenommen wird, das in eine Ringnut im Innenmantel des Läuferschaftes einrastet. Die damit verbundene begrenzte Zugänglichkeit zum Federelement wirkt sich insbesondere in der Großserienfertigung nachteilig aus.

Andere bekannte Läufer (DE 89 00 139 U) umgehen diesen Nachteil, indem sie die Ringnut mittelbar über eine in dem Verteilerläufer angeordneten Buchse im Außenbereich des Läuferschaftes anordnen.

Dazu werden jedoch kompliziert gestaltete Halterungen im Läuferschaft und ein verzweigt ausgebildetes, mit vielen voneinander abhängigen Fertigungstoleranzen ausgestattete Sicherungselemente verwendet.

Dieser Umstand beeinträchtigt trotz hohen Konstruktions- und Fertigungsaufwands die Zuverlässigkeit des Antriebs des Verteilerläufers und mittelbar die Funktionserfüllung des Zündverteilers.

## Vorteile der Erfindung

Der erfindungsgemäße Verteilerläufer nach den kennzeichnenden Merkmalen des Anspruchs 1 hat demgegenüber den Vorteil, daß die vorerwähnten Unzulänglichkeiten in zufriedenstellendem Maß vermieden werden.

Mit einem einfach gestalteten und leicht herstellbaren Sicherungselement wird ein kostengünstiges Bauteil verwendet. Trotz dieses in Kunststofftechnologie ausgeführten Sicherungselements ist die Funktionsfähigkeit des Verbandes zwischen Verteilerläufer und Antriebswelle über eine kombinierte Formschluß- und Kraftschlußsicherung gewährleistet.

Dazu wird als Sicherungselement ein Ringkörper bzw. eine Scheibe verwendet, deren Rastkörper in vorteilhafter Heise unmittelbar in eine Ringrille an der Außenwandung des Verteilerläuferschaftes einrastet.

Das Sicherungselement ist kostengünstig herstellbar und, da aus Kunststoff bestehend, frei von Reibrostbildung.

Die Ausgestaltung der Rastkörper ist dank des Kunststoffspritzverfahrens in weiten Grenzen wählbar und auf viele Typen von Zündverteilern abstimmbar.

Die Dämpfungseigenschaft des Kunststoffs ergeben weitestgehende Verschleißfreiheit des Sicherungselements, so dsß es in Verbindung mit der leichten Auswechselbarkeit wiederverwendbar ist.

In den Unteransprüchen sind vorteilhafte Maßnahmen für die Realisierung der Erfindung gegeben. Besonders vorteilhaft ist die Ausgestaltung nach Anspruch 11, wo dank der gezielten Formbarkeit des Sicherungselements eine partielle Anpassung an einen fest auf der Antriebswelle sitzenden Rotor möglich ist und eine verminderte Bauhöhe erreicht wird.

## Zeichnung

Drei Ausführungsbeispiele der Erfindung sind in der Zeichnung dargestellt und in der Figurenbeschreibung näher erläutert.

Es zeigen Figur 1 als erstes Ausführungsbeispiel einen Verteilerläufer für Zündverteiler von Brennkraftmaschinen mit abschnittsweisem Endstück der Antriebswelle und mit einem Sicherungselement. Figur 2 als zweites Ausführungsbeispiel die Antriebswelle mit einem Rotor und ein an diesen angepaßten Sicherungselement, Figur 3 als drittes Ausfübrungsbeispiel die Antriebswelle mit dem Rotor und einem darauf befestigten Sicherungselement, Figur 3a dazu das Sicherungselement in der Draufsicht in verkleinertem Maßstab.

## Beschreibung der Ausführungsbeispiele

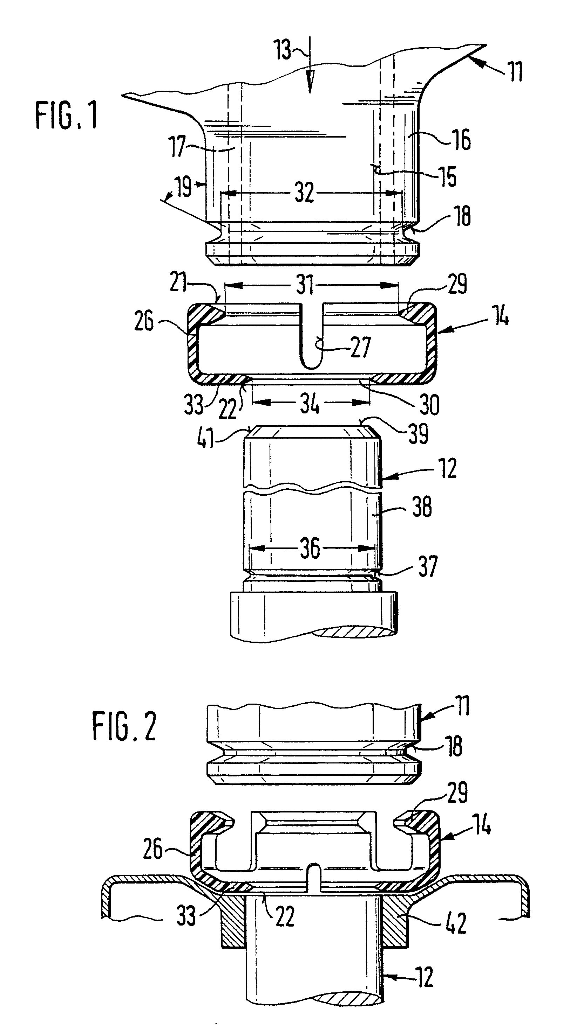

Der in Figur 1 partiell dargestellte Zündverteiler für Brennkraftmaschinen für die Verteilung von Zündspannungsimpulsen in einer Mehrzylinderbrennkraftmaschine zeigt einen Verteilerläufer 11, der mit einer als Verteilerwelle ausgebildeten Antriebswelle 12 in Richtung des Pfeiles 13 mittels eines Sicherungselementes 14 verbindbar ist.

Der Verteilerläufer 11 weist eine zur Antriebswelle 12 koaxialen Schaft 16 auf. Der Schaft 16 ist hülsenförmig mit einer Bohrung 15 zur Aufnahme der Antriebswelle 12 und kann in bekannter Weise eine fest darin angeordnete Lagerbuchse 17 aufweisen. Der Schaft 16 hat an seiner Außenwandung eine Ringrille 18. Ihre Lage ist konzentrisch zum Schaft 16. Die Ringrille 18 verläuft im Querschnitt konisch und erweitert sich zur Mantelfläche der Antriebswelle 12 hin unter Bildung eines Erhebungswinkels 19. Der Erhebungswinkel 19 liegt im Bereich zwischen 15° und 35° und beträgt beim ersten Ausführungsbeispiel 25°.

Unterhalb des Verteilerläufers 11 ist, getrennt gezeichnet, das Sicherungselement 14 dargestellt. Das Sicherungselement 14 ist im Grundaufbau topfförmig mit einem dem Verteilerläufer 11 zugewandten Rand 21 und einer dieser gegenüberliegenden Bodenfläche oder Grundfläche 22. Der in der Draufsicht kreisringförmige Rand 21 ist aus Rastkörpern 26 in Form von federnden Rastarmen geformt, wobei die Rastkörper 26 durch vom Rand 21 ausgehenden Ausnehmungen 27 voneinander getrennt sind und Rastzähne bildend, keilförmige Endstücke 29 aufweisen, die mit ihrer inneren Begrenzung einen Innendurchmesser 31 definieren und deren Kontur dem Profil der Ringrille 18 angepaßt, in diese einrastbar sind und dabei das Sicherungselement 14 auf dem Verteilerläufer 11 fixieren.

Die Ringrille 18 weist einen Innendurchmesser 32 auf, der um ein Fügespiel größer ist als der Innendurchmesser 31, so daß beim Fügen des Sicherungselements 14 im Verteilerläufer 11 mittels der Rastkörper 26 und der Ringrille 18 die Verbindung unter einer Vorspannung steht.

Die Grundfläche 22 ist in der Draufsicht kreisringförmig unter Bildung einer Durchführöffnung 30, von der die radialgerichteten Ausnehmungen 27 ausgehen, die federnde, radial nach innen gerichteten Abschnitte 33, die vorzugweise kreissektorförmig sind, bilden. Die Abschnitte 33 formen mit ihrer inneren Begrenzung einen Innendurchmesser 34 der Grundfläche 22.

Der Innendurchmesser 34 ist um ein Fügespiel kleiner als ein Innendurchmesser 36 einer Außenringnut 37, die konzentrisch in der Antriebswelle 12 verläuft und annähernd Halbkreiskontur aufweist. An diese Kontur ist das Profil der Abschnitte 33 im Bereich ihrer inneren Begrenzung angeglichen.

Von der Außenringnut 37 ausgehendl setzt sich die Antriebswelle 12, zum Sicherungselement 14 hin in einem zylindrischen Schaft 38 fort, der sich zu einer Stirnfläche 39 über eine Einführschräge 41 im Durchmesser verjüngt, über die die Abschnitte 33 beim Aufsetzen des Verteilerläufers 11 auf die Antriebswelle 12 gleiten können.

Der Verteilerläufer 11 wird mit der Antriebswelle 12 in der Weise zusammengefügt, daß in einem Vorbereitungsschritt das Sicherungselement 14 mit der Grundfläche 22 über die Einführungsschräge 41 auf den Schaft 38 geschoben wird. Dabei weiten sich die Abschnitte 33 federnd nachgiebig auf, bis das Sicherungselement 14 so weit auf der Antriebswelle 12 axial verschoben ist, daß die Abschnitte 33 in die Außenringnut 37 mit Sitzpressung einrasten können.

In einem nachfolgenden Fügeschritt wird nun der Verteilerläufer 11 auf die vormontierte Einheit zwischen Antriebswelle 12 und Sicherungselement 14 geschoben. Dabei gleitet die Lagerbuchse 17 über den Schaft 38 der Antriebswelle 12, bis die Rastkörper 26 in Eingriff kommen mit der Ringrille 18 und die Endstücke 29 in die Ringrille 18 einrasten.

Damit ist die Fügung zwischen Verteilerläufer 11 und Antriebswelle 12 mittels des Sicherungselements 14 abgeschlossen, wobei diese Axialsicherung den Charakter einer lösbaren Rastverbindung hat, da das Sicherungselement 14 mittels des Erhebungswinkels 19 der Ringrille 18 bei entsprechender Axialkraft wieder ausrasten kann und somit der Verteilerläufer 11 wieder von der Antriebswelle 12 lösbar ist. Durch die im Querschnitt halbkreisförmige Außenringnut 37 wird erreicht, daß dem Ausrastvorgang des Verteilerläufers 11 aus dem Sicherungselement 14 der Vorrang gegeben ist vor einem Ausrasten des Sicherungselements 14 aus der Außenringnut 37.

In Figur 2 ist das zweite Ausführungsbeispiel gezeigt, das auf der Antriebswelle 12 einen fest mit ihr verbundenen Rotor 42 aufweist. Der Rotor 42 ist ein topfförmiges Element und Teil eines Zündimpulsgebers und enthält zur Antriebswelle 12 hin einen Bereich, der eingesenkt ist. In diesen, der Antriebswelle 12 benachbarten Bereich wird auch das Sicherungselement 14 positioniert, so daß im Sinne einer platzsparenden, nur eine geringe axiale Höhe beanspruchenden Verbindungslösung zwischen Verteilerläufer 11 und Antriebswelle 12 das Sicherungselement 14 in dem Bereich, in dem es dem Rotor 42 gegenübersteht, der Kontur des Rotors 42 angeglichen ist.

Die Rastung des Sicherungselements 14 zum einen in die Außenringnut 37 der Antriebswelle 12 und zum anderen in die Ringrille 18 des Verteilerläufers 11 ist gleichwirkend wie im ersten Ausführungsbeispiel ausgeführt.

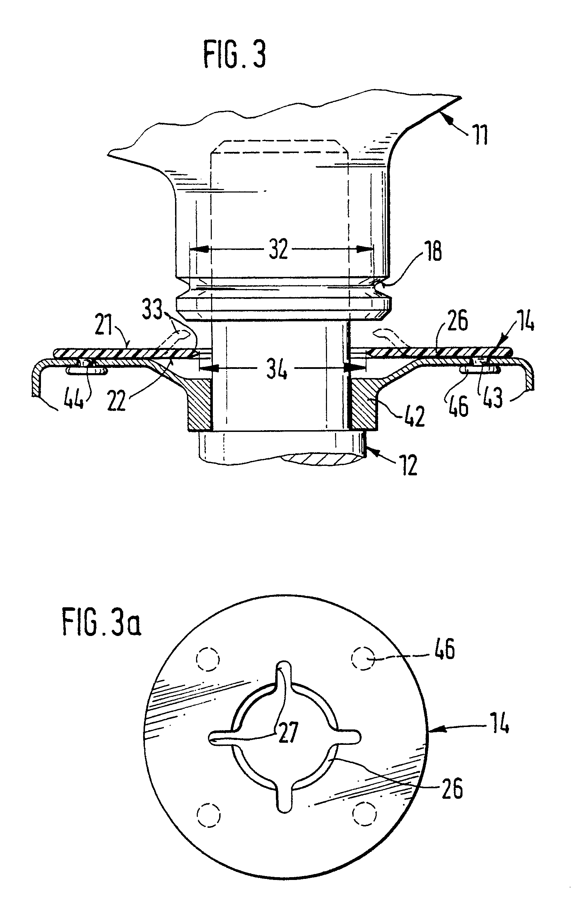

In Figur 3 ist beim dritten Ausführungsbeispiel auf der Antriebswelle 12 wiederum ein Rotor 42 fixiert. Auf dem Rotor 42 ist das Sicherungselement 14 aufgesetzt. Das Sicherungselement 14 ist beim dritten Ausführungsbeispiel scheibenförmig ausgebildet und enthält nur die Grundfläche 22. Diese ist, eine Durchtrittsöffnung 30 freilassend, kreisringförmig und weist, wie in den zuvor beschriebenen Ausführungsbeispielen nach Figur 1 und 2, die Abschnitte 33 auf. Die Grundfläche 22 trägt auf der dem Rotor 42 zugewandten Seite Befestigungsstifte 43, die, durch Bohrungen 44 des Rotors 42 hindurchtretend, Überstände bildend, zu flachen Warzen 44, vorzugsweise durch ein thermisches Verfahren, aufgeweitet sind und so das Sicherungselement 14 auf dem Rotor 42 und damit mittelbar auf der Antriebswelle 12 fixieren.

Durch diese Befestigungsart entfällt beim dritten Ausführungsbeispiel die Notwendigkeit einer Rastverbindung zwischen Sicherungselement 14 und Antriebswelle 12, so daß an dieser die Außenringnut 37 des zweiten Ausführungsbeispiels entfällt. Die die Grundfläche 22 darstellenden Abschnitte 33 des Sicherungselements 14 sind an ihrer inneren Begrenzung der Kontur der Ringrille 18 des Verteilerläufers 11 angeglichen, wobei der Innendurchmesser 34 der Grundfläche 22 um ein Fügespiel kleiner ist als der Innendurchmesser 32 der Ringrille 18.

Bei der Fügung des Verteilerläufers 11 auf der Antriebswelle 12 rasten die Abschnitte 33 unter Zurückbleiben einer Vorspannung in die Ringrille 18 ein, wodurch die Abschnitte 33 die Funktion der Rastkörper 26 übernehmen.

Um das Einfedern des Sicherungselements 14 in die Ringrille 18 zu erleichtern, können die Abschnitte 33, aus der Grundfläche 22 axial hervortretend, auch als gekröpfte Rastkörper 26 ausgebildet sein. Diese Ausgestaltung ist in Figur 3 in unterbrochenen Strichen angedeutet.

Zur ergänzenden Anschauung ist in Figur 3a das Sicherungselement 14 in verkleinertem Maßstab in der Draufsicht dargestellt. Darin wird deutlich, daß die Abschnitte 33 kreissektorförmige Gestalt haben und die Abschnitte 33 durch die schlitzförmigen Ausnehmungen 27 voneinander getrennt sind. Des weiteren sind vier konzentrisch angeordnete, jeweils um 90° versetzte Warzen 44 in unterbrochener Linierung angedeutet.

Mit dem Einrasten der Abschnitte 33 in die Ringrille 18 ist auch beim dritten Ausführungsbeispiel die Fügung zwischen Verteilerläufer 11 und Antriebswelle 12 vollzogen im Sinne einer, bei Aufbringung einer entsprechenden Axialkraft, lösbaren Rastverbindung. Die Rastverbindung zwischen Verteilerläufer 11 und Antriebswelle 12 mittels des Sicherungselements 14 in der beschriebenen Weise ist im wesentlich dadurch bestimmt, daß das Sicherungselement 14 aus Kunststoff gefertigt ist und in Verbindung mit seiner Formgebung, charakterisiert durch von Ausnehmungen 27 getrennten Rastkörpern 26, ein Eigenfederungsverhalten aufweist, das eine Fügung zwischen Verteilerläufer 11 und Antriebswelle 12 ohne den Einsatz von Hilfswerkzeugen zur Spreizung des Sicherungselements 14 ermöglicht. Das in Kunststoffspritztechnik ausgeführte Sicherungselement 14 ist kostengünstig herstellbar und die Form des Sicherungselements 14 in weiten Grenzen wählbar und auf viele Typen von Zündverteilern abstimmbar. Die Dämpfungseigenschaften des Kunststoffes ergeben zudem, da frei von Reibrostbildung, weitestgehende Verschleißfreiheit des Sicherungselements 14, so daß es in Verbindung mit der Eigenschaft einer leichten Auswechselbarkeit wiederverwendbar ist.

## Ansprüche

1. Verteilerläufer von Zündverteilern für Brennkraftmaschinen für die Verteilung von Zündspannungsimpulsen in einer Mehrzylinderbrennkraftmaschine mit einem Schaft (16) und einer Bohrung (15) zur Aufnahme einer Antriebswelle (12) und mit einem federnden Sicherungselement (14), das beim axialen Aufstecken des Verteilerläufers (11) auf die Antriebswelle (12) mit dem Verteilerläufer (11) koppelbar ist und die Verbindung zwischen Verteilerläufer (11) und Antriebswelle (12) axial sichert, und das Sicherungselement (14) zumindest mittelbar mit der Antriebswelle (12) und über eine Rille (18) in der Außenwandung des Schaftes (16) mit diesem verbindbar ist, dadurch gekennzeichnet, daß das Sicherungselement (14) als geschlossenes Kunststofformteil mit einer Durchführöffnung (30) ausgebildet ist mit von der Durchführöffnung (30) ausgehenden Ausnehmungen (27) und dazwischen liegenden federnden Rastkörpern (26), die beim Zusammenfügen des Verteilerläufers (11) mit der Antriebswelle (12) in die Ringrille (18) einrastbar sind.

2. Verteilerläufer nach Anspruch 1, dadurch gekennzeichnet, daß die Ringrille (18) im Querschnitt konisch verläuft und sich unter Bildung eines Erhebungswinkels (19) zur Mantelfläche der Antriebswelle (12) hin erweitert.

3. Verteilerläufer nach Anspruch 2, dadurch gekennzeichnet, daß der Erhebungswinkel (19) in einem Bereich zwischen 15° bis 35° liegt.

4. Verteilerläufer nach Anspruch 1, dadurch gekennzeichnet, daß das Sicherungselement (14) topfförmig ist mit einem dem Verteilerläufer (11) zugewandten nach innen weisendem Rand (21) und einer dieser gegenüberliegenden durch die Durchführöffnung (30) durchbrochenen Grundfläche (22) und mit sowohl am Rand (21) als auch an der Grundfläche (22) angeordneten Ausnehmungen (27).

5. Verteilerläufer nach einem der vorstehenden Ansprüche 1-4 , dadurch gekennzeichnet, daß der Rand (21) aus den Rastkörpern (26) gebildet ist, wobei die durch die Ausnehmungen (27) getrennten Rastkörper (26), Rastzähne bildend, nach innen weisende Endstücke (29) enthält, deren Kontur dem Profil der Ringrille (18) angepaßt, in diese einrastbar sind und das Sicherungselement (14) auf dem Verteilerläufer (11) fixieren.

6. Verteilerläufer nach Anspruch 5, dadurch gekennzeichnet, daß die Endstücke (29) den Innendurchmesser (31) des Randes (21) formen, der um ein Fügespiel kleiner ist als der Innendurchmesser (32) der Ringrille (18).

7. Verteilerläufer nach einem der vorstehenden Ansprüche, dadurch gekennzeichnet, daß die kreisringförmige Grundfläche (22) aus federnd ausgebildeten, radial nach innen gerichteten Abschnitte (33), die vorzugsweise kreissektorförmig sind, gebildet ist, wobei die Abschnitte (33) mit ihrer inneren Begrenzung den Innendurchmesser (34) der Grundfläche (22) formen.

8. Verteilerläufer nach Anspruch 7, dadurch gekennzeichnet, daß der Innendurchmesser (34) der Grundfläche (22) um ein Fügespiel kleiner ist als der Innendurchmesser (36) der Ringrille (32); (Figur 3).

9. Verteilerläufer nach Anspruch 7, dadurch gekennzeichnet, dafl der Innendurchmesser (34) der Abschnitte (33) um ein Fügespiel kleiner ist als ein Innendurchmesser (36) einer Außenringnut (37) in der Antriebswelle (12), in der die Abschnitte (33) einrastbar sind.

10. Verteilerläufer nach Anspruch 9, dadurch gekennzeichnet, daß die Außenringnut (37) im Querschnitt halbkreisförmig ist.

11. Verteilerläufer nach Anspruch 1-3, dadurch gekennzeichnet, daß das Sicherungselement (14) im wesentlichen scheibenförmig ausgebildet ist mit kreisringförmiger Grundfläche (22).

12. Verteilerläufer nach Anspruch 5, dadurch gekennzeichnet, daß die kreisringförmige Grundfläche aus federnd ausgebildeten, radial nach innen gerichteten Abschnitte (33), die vorzugsweise kreissektorförmig sind, gebildet ist, wobei die Abschnitte (33) mit ihrer inneren Begrenzung den Innenduchmesser (34) der Grundfläche (22) formen.

13. Verteilerläufer nach Anspruch 12, dadurch gekennzeichnet, daß der Innendurchmesser (34) der Grundfläche (22) um ein Fügespiel kleiner ist als der Innendurchmesser (36) der Ringrille (32); (Figur 3).

14. Verteilerläufer nach Anspruch 11, dadurch gekennzeichnet, daß die Antriebswelle (12) einen fest mit ihr verbundenen Rotor (42) trägt, mit der das scheibenförmige Sicherungselement (14) fest verbunden ist.

15. Verteilerläufer nach Anspruch 14, dadurch gekennzeichnet, daß die Grundfläche (22) des Sicherungselements (14) auf der dem Rotor (42) zugewandten Seite Befestigungsstifte (43) trägt, die, durch Bohrungen (44) des Rotors (42) hindurchtretend, Überstände bildend, zu flachen Warzen (46), vorzugsweise durch ein thermisches Verfahren, aufgeweitet sind und das Sicherungselement (14) auf dem Rotor (42) und damit mittelbar auf der Antriebswelle (12) fixieren; (Figur 3).

16. Verteilerläufer nach vorstehenden Ansprüchen 12-15, dadurch gekennzeichnet, daß das Sicherungselement (14) mit seinen Abschnitten (33) die Rastkörper (26) verkörpert, wobei deren innere Begrenzung der Kontur der Ringrille (18) angeglichen ist, in diese einrastbar sind und das Sicherungselement (14) auf dem Verteilerläufer (11) fixieren.

17. Verteilerläufer nach einem der vorstehenden Ansprüche 12-16, dadurch gekennzeichnet, daß die aus den Abschnitten (33) gebildeten Rastkörper (26) in gekröpfter Ausgestaltung, die Grundfläche (22) axial überragend, ausgebildet sind; (Figur 3).

FIG.1

FIG.2

# FIG. 3

# FIG.3a